Europäisches Patentamt

European Patent Office

Office européen des brevets

(19)

(11)  EP 0 603 601 B1

(12)  **EUROPÄISCHE PATENTSCHRIFT**

(45)  Veröffentlichungstag und Bekanntmachung des
Hinweises auf die Patenterteilung:
**12.02.1997  Patentblatt 1997/07**

(51)  Int. Cl.$^6$: **B65G 53/66**

(21)  Anmeldenummer: 93119394.0

(22)  Anmeldetag: 02.12.1993

(54)  **Vorrichtung zum pneumatischen Fördern von Schüttgut**

Device for the pneumatic transport of bulk material

Dispositif pour le transport pneumatique de matières en vrac

(84)  Benannte Vertragsstaaten:
**CH DE FR GB LI**

(30)  Priorität: **22.12.1992 DE 4243327**

(43)  Veröffentlichungstag der Anmeldung:
**29.06.1994  Patentblatt 1994/26**

(73)  Patentinhaber: **MOTAN-FULLER
Verfahrenstechnik GmbH
88242 Weingarten (DE)**

(72)  Erfinder:
  • **Heep, Dieter
    D-7961 Bergatreute (DE)**
  • **Isopp, Gottfried
    D-7994 Langenargen (DE)**

(74)  Vertreter: **Riebling, Peter, Dr.-Ing.,
Patentanwalt
Postfach 31 60
88113 Lindau (DE)**

(56)  Entgegenhaltungen:
**DE-A- 2 022 962            DE-A- 3 714 924
DE-B- 2 219 199**

Printed by Rank Xerox (UK) Business Services
2.13.13/3.4

## Beschreibung

Die Erfindung betrifft eine Vorrichtung zur pneumatischen Förderung von Schüttgütern mittels einer Förderleitung und einer Reingas führenden Nebenleitung, von wo aus mehrfache Verbindungen mittels federgesperrter Überströmventile zur Förderleitung hergestellt sind, gemäß dem Oberbegriff von Anspruch 1.

Vorrichtungen dieser Gattungen sind aus der DE-PS 23 05 050 und DE-PS 25 50 164 bekannt. Die DE-PS 33 23 739, DE-OS 34 35 907 und die DE-PS 30 37 517 werden in der DE-PS 37 14 923 umfangreich gewürdigt.

Im Laufe der praktischen Erprobung der Systeme wurden die in der DE-PS 37 14 923 beschriebenen Spezialventile durch die unterschiedlichsten Schüttgüter immer besser angepaßt und machten den pneumatischen Transport zwischen 2,5-10 m/s erst möglich. Doch die für die leichtgängigen Schaltungen bei niedrigen Differenzdrücken verwendeten Steuermembranen neigten zum Verschleißen oder Herausreißen, was wiederum zum Verschmutzen der Reinluftseite durch Schüttgut führte, wodurch das ganze System ausfiel.

Zur Lösung des Problems schlägt die DE-PS 37 14 923 insgesamt zwei Nebenleitungen, die Reingasleitung und eine gesondert durchgehende Solldruckleitung zur Messung eines Unterschiedes bei gestörtem Schüttguttransport durch Druckdifferenz vor.

Die Verwendung solcher Solldruck-Nebenleitungen setzt aber einen idealisierten, proportional über die Länge der Schüttgutleitung vorhandenen Druckabfall voraus, der in der Praxis gar nicht vorhanden ist (Vergleiche: "Pneumatische Förderung", W. Siegel, Vogel Fachbuchverlag Verfahrenstechnik, Seite 44), weil er durch Anordnung von Weichen und Rohrbogen beeinflußt wird.

Deshalb wird versucht, durch Anheben des Druckes am Anfang der Solldruck-Nebenleitung bzw. durch Drosseln am Ende der Nebenleitung eine ungefähre günstige Anpassung des gegenseitigen Druckgefälles zu erreichen. Trotzdem kommt es an kritischen Stellen vor Rohrbogen zu Verstopfungen, die sich erst nach längerem Wirken des Systems wieder auflösen.

Weiterhin hat sich gezeigt, daß die Druckdifferenzmeßstellen einer starken Schwingungsfrequenz unterworfen sind, die offenbar zur Beschädigung der Membranen beiträgt. Diese Schwingungen wirken sich nachteilig auf eine Direktsteuerung auf mechanischem oder elektrischem Wege vom Drucktransmitter auf das Reingasventil aus, wie es bei Ein-Punkt-Schalter-Regelungen generell zu beobachten ist.

In der EP 0 176 627 wird ein System beschrieben, welches sich ebenfalls an einen idealisierten Druckabfall anlehnt. Kommt es aber beim Füllen der Leitung schon unterwegs zu einem Stopfen, dann wird die Rohrleitung, von vorne nach hinten, von Druckregler zu Druckregler mit maximalem Förderdruck beaufschlagt, bis der Stopfen erreicht wird. Nach Splitten des Stopfens entlädt sich die unter Maximaldruck stehende Teilförderleitung, und es bilden sich unerwünschte Geschwindigkeiten.

Als Ventil wird ein Druckregler mit einem kombinierten, federgestützten Rückschlagventil verwendet. Die Federn dieser Rückschlagventile sind alle gleich eingestellt, und zwar dem Sinne nach: zu erwartender Förderdruck geteilt durch die Anzahl der Ventile, welche durch die Länge der Förderleitung und den gewünschten Ventilabstand bestimmt werden. Damit wird der theoretische Druckabfall von einem Druckregler bis zum nächsten stromabwärts eingebauten Druckregler/Rückschlagventil kompensiert.

In der DE-PS 30 37 517 C2 wird deutlich, daß alle Maßnahmen hier und anderswo darauf hinzielen, unterschiedlichste Förderaufgaben mit der gleichen Anlage zu lösen. Dies mag für Versuchsanlagen gelten, in denen laufend die verschiedensten Schüttgüter in der gleichen Leitung mit unterschiedlichsten Geschwindigkeiten und Massenströmen getestet werden, um die theoretischen pneumatischen Berechnungen durch Versuche zu erhärten. In der Praxis lautet jedoch in den meisten Fällen die Anforderung an ein System dieser Art viel einfacher:

"Störungsfreier Transport eines Schüttgutes mit einem festen Massenstrom von A nach B zu niedrigsten Investitions- und Betriebskosten bei größtmöglicher Verfügbarkeit", z. B. der schonende Transport von geperltem Ruß aus einem Container in die Siloanlage mit einer Leitung von 15 - 20 t/h über maximal 100 m.

Der Erfindung liegt die Aufgabe zugrunde, eine Anlage der gattungsgemäßen Art dahingehend zu vereinfachen, daß sie mit Beschränkung auf die eigentliche, projektspezifische Anforderung erschwinglich zu investieren und ohne Störung zu betreiben ist sowie die Energiekosten in einem vertretbaren Rahmen zu halten sind.

Diese Aufgabe ist erfindungsgemäß durch die im Kennzeichen des Patentanspruches 1 angegebenen Merkmale bzw. durch die Abänderung nach Anspruch 5 gelöst.

Im Unterschied zu allen bisher bekannten Anlagen wird der durch genaue pneumatische Berechnung vorkalkulierte und in einer Versuchsanlage erhärtete Druckverlauf der zu betreibenden Schüttgutanlage durch mechanische Einstellung fest "aufgeprägt" und geringe Abweichungen werden wahlweise durch Änderung des Massenstromes (Schleusendrehzahl) und/oder der Luftgeschwindigkeit (Luftmenge) nachgeregelt.

Die Vorgabe einer festen Druckverlustkennlinie erfolgt insofern, als daß jedes einzelne Überströmventil einen in stromabführender Richtung steigenden Federdruck erhält, wobei die Einstellungen berücksichtigen können, wenn der tatsächliche Druckverlauf von dem idealisierten Druckverlauf abweicht.

Die Gleichung zur Einstellung der Federn lautet:

1) Für Druckförderung

$$P_{\text{Förderdruck}} = P_{\text{Feder}} + \text{erwarteter Förderdruck an der Einbaustelle bei ungestörtem Betrieb}$$

2) Für Saugförderung

$$P_{\text{atm}} = P_{\text{Feder}} - \text{zu erwartender Förderdruck an der Einbaustelle bei ungestörtem Betrieb}$$

Diese Methode wird nach der Erfindung durch Eck-Sicherheitsventile praktiziert, bei denen ein vernünftiger Einstellmechanismus der Federkraft gewährleistet ist. Außerdem ist es üblich, Federn mit unterschiedlichen Kennlinien in seriengleiche Ventile einzusetzen, um viele Druckbereiche abzudecken, ohne die Einstellgewinde zu variieren.

Der Kern der Erfindung ist also der Einbau von Sicherheitsventilen in dem Schüttgutstopfen-Verschiebedruck entsprechenden Abständen auf der Förderleitung, die mit einer gemeinsamen Reinluftleitung verbunden sind. Diese Leitung zweigt zwischen einer Lavaldüse und einer Pulver-Hochdruckschleuse ab und besitzt damit beim Überströmen die gleiche Luftkapazität wie die Förderleitung. Damit bleibt beim Stopfenauflösen bzw. -verhindern die Förderendgeschwindigkeit unverändert.

Die Ventile sind mit einer Feder gegen die begleitende Reinluftleitung verschlossen.

Das erste Ventil ist z. B. auf 300 mm WS über die Feder eingestellt, das stromab folgende auf 600 mm WS usw., das letzte Ventil ist auf den gewünschten maximalen Förderdruck eingestellt.

Wird die Anlage durch Starten der Zellenradschleuse betrieben, steigt der Förderdruck und damit der statische Druck in der Begleitleitung. Das über die Schleuse eingespeiste Schüttgut bewegt sich in der Förderleitung stromab, und es werden immer mehr Ventile funktionsfähig, da der steigende Förderdruck sich in die Begleitleitung fortpflanzt und größer ist als die am Ventil eingestellte Federkraft, bis theoretisch der aufgeprägte Druckverlauf erreicht ist.

Da in der Praxis durch schwankende Eigenschaften des Schüttgutes (Sorte, Kornverteilung, Temperatur, Feuchtigkeit und Schüttgewicht) Abweichungen der eingestellten Druckabfallkennlinie erfolgen, müßten die Federeinstellungen laufend verändert werden.

Ein wesentlicher Bestandteil der Erfindung ist deshalb die Konstanthaltung des Förderdruckes innerhalb einer Arbeit zwischen zwei Punkten eines Zweipunktreglers, wobei Regelschwingungen durch Änderung des Massenstromes mit Hilfe einer Drehzahländerung der Zellenradschleuse und/oder durch die Veränderung der Fördergeschwindigkeit durch Vordruckänderung an der Lavaldüse ausgeglichen werden, da bekanntlich bei Erhöhung der Förderluftmenge der Förderdruck fällt bzw. bei Absenkung der Förderluftmenge der Förderdruck steigt.

Dieser Vorgang ist einfacher zu beherrschen als eine variable Reaktion von Sonderventilen auf alle möglichen Förderzustände.

Sollte es trotz der dauernd arbeitenden Überströmventile zur Haltung des aufgeprägten Druckniveaus zu einer Verstopfung kommen, öffnen in dem Stopfen und hinter dem Stopfen alle Überströmventile, und die Förderluft strömt aus der Reinluftleitung in die Förderleitung. Aufgrund des fallenden Druckes in der Reinluftleitung schließen von dem letzten Ventil stromauf die Ventile nacheinander, da der $P_{\text{Förderdruck}}$ kleiner wird als der eingestellte $P_{\text{Förderdruck}}$, bis zum Stopfen in umgekehrter Weise wie beim Befüllen der Leitung.

Der Druckabfall ist insofern wünschenswert, da er eine weitere Verdichtung des Stopfens durch maximalen Förderdruck wie bei anderen Systemen vermeidet. Die Luft umgeht also den Stopfen und beginnt, ihn stromab aufzulösen. Setzt sich das Fördergut wieder in Bewegung, steigt wieder der Druck, und wie beim Füllen der Leitung kommt diese wieder in Gang.

Da die Leitung beim Auftritt eines Stopfens kein Schüttgurt mehr annimmt, wird über die Füllstandssonde unter der Zellenradschleuse die Schüttguteinspeisung so lange unterbrochen, bis die Sonde wieder "frei" meldet.

Die Federkraft $P_{\text{Feder}}$ ist wiederum aufgesplittet in einen für alle Ventile geltenden Festwert $P_{\text{Feder-Luftaustritt}}$, wirkend zur Förderleitung, und einen variablen Wert $P_{\text{Feder-Lufteintritt}}$ mit Absperrfunktion gegen die Bypass-Leitung, damit immer im Ventil ein durch den Festwert der Feder des Kegelventils hervorgerufener Überdruck herrscht, der bei nicht aktivierten Ventilen ein Eindringen von Schüttgut in das Ventil mit verhindert.

Das Kegelventil mit Wirkung zur Förderleitung ist großflächig konzipiert, daß beim Öffnen eine Ringkanalströmung etwaige Produktansätze an der Muffenwand zum Rohr beseitigt, während gleichzeitig der Ventilboden mechanisch infolge der Öffnungsbewegung Schüttgut in Richtung Förderrohr wegdrückt.

Im folgenden wird die Erfindung anhand von lediglich einen Ausführungsweg darstellenden Zeichnungen näher erläutert. Hierbei gehen aus den Zeichnungen und ihrer Beschreibung erfindungswesentliche Merkmale und Vorteile der Erfindung hervor.

Es zeigen:

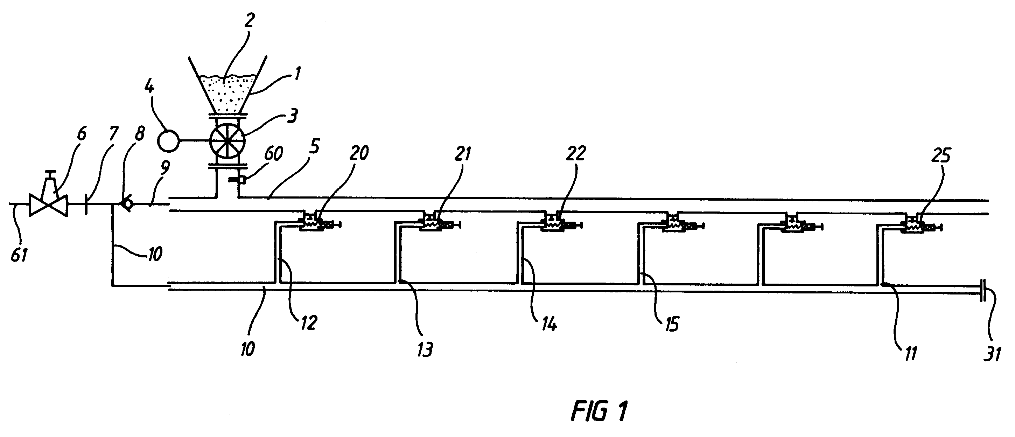

Figur 1:       schematisiert eine Vorrichtung nach der Erfindung mit Druckförderung;

Figur 2:       die Vorrichtung nach Figur 1 bei Auftreten eines Pfropfens;

Figur 3:             die Druckverläufe in der Hauptförderleitung;

Figur 4-7:           die sich veränderden Druckverläufe in der Hauptförderleitung beim Öffnen der Überströmventile;

Figur 8:             ein Überströmventil im Schnitt;

Figur 9:             eine Vorrichtung nach der Erfindung in einer weiteren Ausführungsform mit Saugförderung;

Figur 10:            das Diagramm des Druckverlaufes in der Hauptförderleitung;

Figur 11 bis 12:     die Druckverläufe in der Hauptförderleitung beim Öffnen der Überströmventile.

Die Vorrichtung nach der Erfindung besteht in einer ersten Ausführungsform aus einem Schüttguttrichter 1, in dem Schüttgut 2 über eine von einem Motor 4 angetriebene Zellenradschleuse 3 in eine Förderleitung 5 gefördert wird, die auch als Haupt-Förderleitung bezeichnet wird.

Am Eingang der Förderleitung 5 wird hierbei ein Druckminderer 6 angeordnet, der auf eine Lavaldüse 7 arbeitet, der gegenüberliegend ein Rückschlagventil 8 angeordnet ist. Jenseits des Rückschlagventiles 8 wird über die Reinluftleitung 9 Luft in die Förderleitung 5 eingeblasen.

Stromaufwärts des Rückschlagventiles 8 zweigt eine Begleitleitung 10 ab, welche den von der Netzleitung 61 kommenden Luftstrom in eine Begleitleitung 10 einspeist. Die Begleitleitung 10 ist am Ende durch einen Verschluß 31 abgeschlossen, während die Förderleitung 5 in einen Empfangsbehälter (nicht gezeichnet) mündet.

Erfindungsgemäß sind in der Förderleitung 5 nun eine Reihe von Überströmventilen 20-25 angeordnet, und zwar in einem solchen Abstand, daß dafür gesorgt ist, daß, wenn sich ein Schüttgutstopfen 16 bildet, daß dieser dann noch mit# dem zur Verfügung stehenden Druck verschoben werden kann.

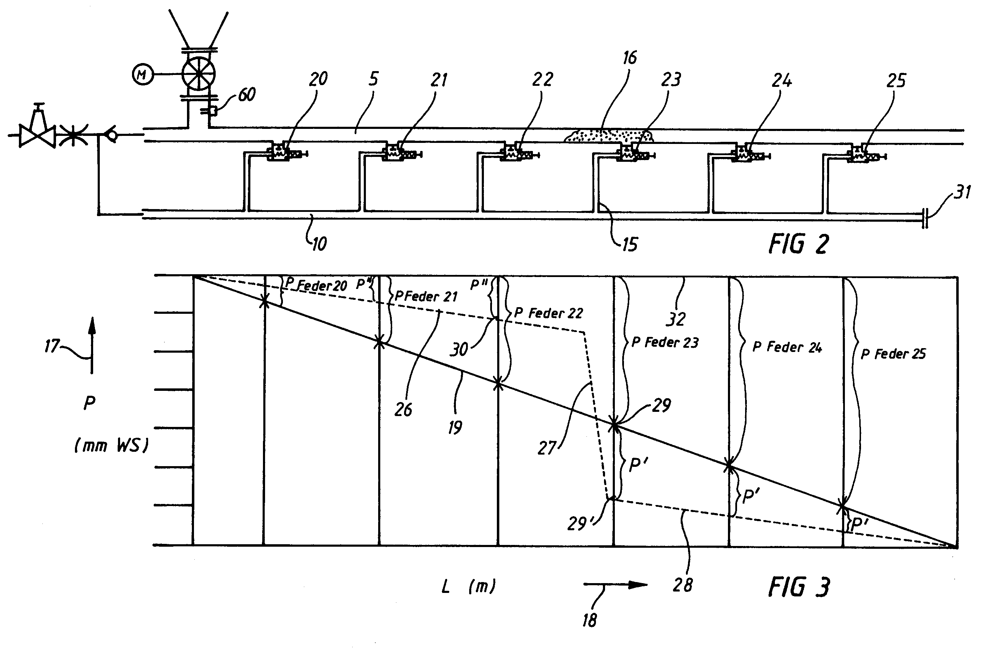

Wird nämlich ein längerer Propfen 16 erzeugt, dann reicht er mit seinen Begrenzungen über benachbarte Überströmventile 20-25 hinaus und erstreckt sich z. B. über ein bestimmtes Überströmventil 23 (Figur 2). Von diesem Überströmventil wird dann der Propfen bei der Auflösung aufgesplittet (aufgetrennt), so daß sich hieraus ergibt, daß der Abstand der Überströmventile 20-25 mit der maximal zulässigen Propfenlänge übereinstimmt.

Bei Auftreten eines Propfens 16 gemäß Figur 2 in der Leitung kommt es zu den in den Figuren 3 bis 7 dargestellten Druckverhältnissen.

In allen Diagrammen ist auf der Ordinate der Druck 17 in der Förderleitung 5 aufgetragen, während auf der Abzisse die Leitungslänge 18 aufgetragen ist.

Ein idealisierter Druckverlauf in der Förderleitung 5 wird durch den Druckverlauf 19 in Figur 3 dargestellt. Es handelt sich hierbei um einen linearen Druckverlauf, welcher dem Druckabfall über die Länge der Förderleitung 5 entspricht.

Erfindungsgemäß wurde nun erkannt, daß die einzelnen Federn der Überströmventile 20-25 so einzustellen sind, daß über die Länge der Leitung vom Förderbeginn bis zum Förderende Federdrücke mit stufenweise ansteigender Federkraft gewählt werden müssen. Der Federdruck (($P_{Feder}$) wird also stufenweise pro Überströmventil 20-25 gewählt, wobei das nächst dem Schüttguttrichter 1 angeordnete Überströmventil 20 eine Federkraft $P_{Feder}$ 20 relativ geringer Größe (Figur 3) aufweist, während das dem Schüttguttrichter 1 am entferntesten liegende Überstromventil 25 eine relativ hohe Federkraft $P_{Feder}$ 25 aufweist.

Die Federkraft entspricht hierbei genau dem Abstand zwischen der Null-Linie 32 (das ist der maximale Druck am Eingang der Förderleitung 5) und dem Schnittpunkt der idealisierten Kennlinie 19 an der entsprechenden Leitungsstelle, wie dies z. B. bei Pos. 29 in Figur 3 dargestellt ist.

Die Federkraft der Feder 23 geht dann von der Null-Linie 32 bis zur Pos. 29.

Wichtig hierbei ist, daß die Federkräfte der einzelnen Überströmventile 20-25 entsprechend dem Diagramm Figur 3 voreingestellt bleiben und ständig diese Federkraft aufweisen, so daß sichergestellt wird, daß bei einem idealisierten Druckverlauf 19, wie er in Figur 3 dargestellt ist, das Überströmventil sich gerade im Übergangsbereich zwischen dem Schließzustand und dem Öffnungszustand befindet. In dieser Position befindet sich also das Überströmventil 20-25 im Gleichgewicht und jede weitere Druckveränderung des idealisierten Druckverlaufes 19 führt dann zu einer gewünschten Veränderung des Ventilzustandes.

Wichtig ist, daß jedes Überströmventil 20-25 über Abzweige 12-15 an der Begleitleitung 10 angeschlossen sind, wobei auf die Steuerseite jedes Überströmventiles 20-25 der gleiche Steuerdruck wirkt, der gleichzeitig auch am Eingang der Förderleitung in die Förderleitung eingespeist wird.

Entsteht gemäß Figur 2 ein Propfen 16 in der Leitung, etwa über dem Überströmventil 23, dann ergibt sich der vom idealisierten Druckverlauf 19 abweichende Druckverlauf, der durch die Kurvenäste 26,27,28 gekennzeichnet ist.

Stromaufwärts des Propfens 16 steigt der statische Druck gegenüber den Überströmventilen an. Die Rohrleitung füllt sich nämlich vor dem Propfen 16 fortschreitend mit Förderluft, was zu einem starken Druckanstieg stromaufwärts des Propfens 16, d.h. also bei den Überströmventilen 20,21, 22 führt. Dies ist durch den angehobenen Kurvenast 26 in Figur 3 dargestellt.

Im Bereich des Propfens 16 kommt es zu einem starken Druckabfall (gekennzeichnet durch den Kurvenast 27) und stromabwärts des Propfens kommt es zu einem Druckabbau gekennzeichnet durch den Kurvenast 28 in Figur 3.

Wichtig ist, daß durch den höheren Druckaufbau vor dem Propfen 16 die Überströmventile 20-22 in Schließrichtung verfestigt werden, während durch den Druckabfall stromabwärts des Propfens 16 die Überströmventile 23,24,25 mit einem geringeren Druck beaufschlagt werden und dadurch öffnen.

Dies ist durch die Federkennlinie oder Federkraft gekennzeichnet, welche ebenfalls in Figur 3 eingezeichnet ist.

Entsprechend der vorhergehenden Erläuterung ist die Federkraft genau so eingestellt, daß im idealisierten Zustand des Druckverlaufes bei Pos. 29 das Überströmventil 23 gerade schließt.

Durch den Druckabfall im Propfen 16 verschiebt sich die Pos. 29 in die Pos. 29', wodurch die Gegenkraft auf das Ventil fehlt und mit der Kraft P' als Differenz wird das Überströmventil 23 geöffnet.

Die gleichen Verhältnisse gelten auch für die Federn der nachgeschalteten Überströmventile 24,25, wo ebenfalls Differenzkräfte P' entstehen (Vergleiche Figur 3), welche zu einem schwächeren Öffnen der Überströmventile 24,25 führen.

Das Überströmventil 23 öffnet also am meisten, während die danach geschalteten Überströmventile 24 und 25 weniger stark geöffnet werden.

Deshalb kommt es zu einem Aufsplitten (auftrennen) des Propfens 16, weil über den Abzweig 15 nun die Förderluft mit hohem Druck über das geöffnete Überströmventil 23 in die Förderleitung 5 eingeblasen wird und hierdurch der Propfen 16 aufgelöst wird. Er wird schnell von der Verstopfungsstelle abtransportiert, weil auch die nachgeschalteten Überströmventile 24 und 25 blasen und hierdurch stromabwärts der Verstopfung die Förderleitung 5 gesäubert wird.

Damit ist aber nur ein Teil des Mechanismus der Propfenauflösung erklärt, denn die eigentliche Propfenauflösung erfolgt wie nachfolgend beschrieben:

Aufgrund des Abblasens der Überströmventile 23,24,25 kommt es zu einem Druckabfall in der Begleitleitung 10, während in der Förderleitung 5 der dort aufgebaute Druck sich nur zögernd über die Zellenradschleuse 3 abbaut.

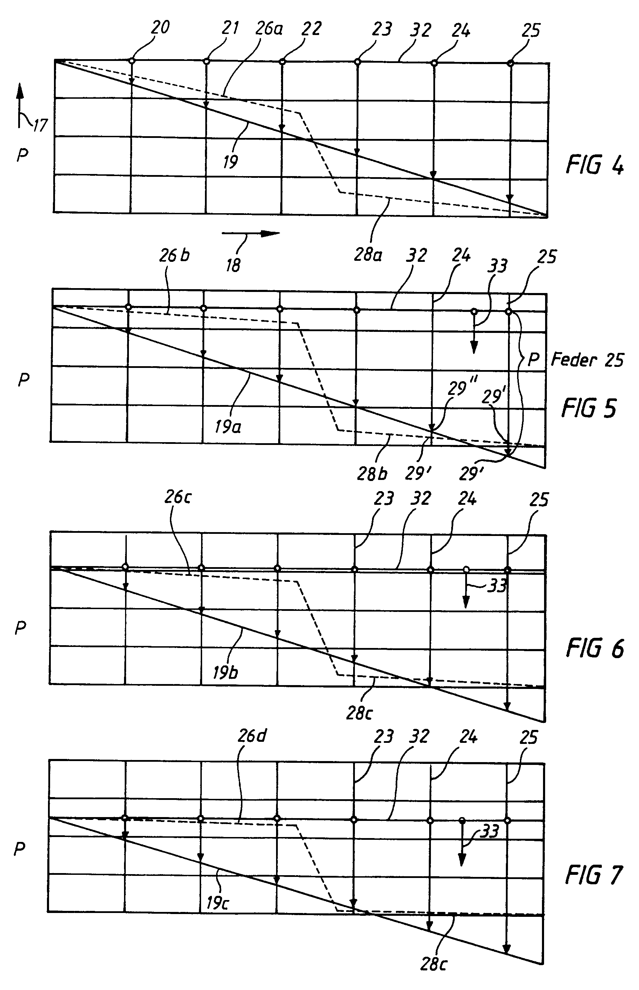

Aufgrund des Druckabfalles in der Begleitleitung 10 schließen die Überströmventile 23,24,25 stromabwärts des Propfens 16, wie dies in den Figuren 4 bis 7 näher beschrieben wird.

Die Figur 4 zeigt hierbei den Druckverlauf in der Förderleitung 5 nach Bildung des Stopfens.

Figur 5 zeigt den sinkenden Förderdruck kommentiert durch die Wanderung der Null-Linie 32 in pfeilrichtung 33 nach unten.

Figur 6 zeigt, daß das Überströmventil 25 bereits schon geschlossen hat, während das Überströmventil 24 schließt und das Überströmventil 23 noch abbläst, während die Figur 7 zeigt, daß die Überströmventile 24 und 25 nun sicher verschlossen sind, während das Überströmventil 23 im Propfen 16 liegt und jetzt mit voller Luftmenge die Verstopfung beseitigt.

Danach steigt der Druck wieder, d.h. die Null-Linie 32 wandert in Gegenrichtung zur eingezeichneten Pfeilrichtung 33 nach oben und die Förderung kommt wieder in Gang, so daß sich der idealisierte Druckverlauf 19 gemäß Figur 3 wieder einstellt, solange bis sich wieder ein Propfen 16 bildet.

Im einzelnen wird zu den Figuren 4 bis 7 folgendes ausgeführt:

Die Figur 4 entspricht in ihrer Erläuterung der vorstehend erläuterten Figur 3.

In Figur 5 ist dargestellt, daß durch das Überströmen der geöffneten Überströmventile 25,24,23 es zu einem Druckabfall in der Begleitleitung 10 kommt. Der Druckabfall wird durch die Verschiebung der Null-Linie 32 in Pfeilrichtung 33 nach unten gekennzeichnet.

Am Beispiel des Überströmventils 25 wird in Figur 5 gezeigt, daß dieses Ventil bereits schon geschlossen ist, weil die Federkraft $P_{Feder}$ 25 größer ist als der in der Begleitleitung 10 herrschende statische Druck gekennzeichnet durch den Kurvenast 28b.

Das heißt, die Differenz zwischen den Positionen 29,29" führt zu einem Verschluß des Überströmventils 25, weil diese Differenz positiv ist, während am Ort des Überströmventils 24 die Differenz zwischen der Position 29 und 29' negativ ist und dazu führt, daß die Federkraft, mit welcher das Überströmventil 24 schließt, kleiner ist als der Druck der auf das Überströmventil wirkt, so daß dieses öffnet und abbläst.

Es fehlt also der Gegendruck aus der Förderleitung 5 auf dieses Ventil.

In den Figuren 6 und 7 findet dieser Vorgang vom letzten Überströmventil 25 beginnend stromaufwärts bis zum Propfen 16 statt, wie dies durch die einzelnen Pfeile in Figur 7 beschrieben ist.

Die Figur 7 zeigt im übrigen, daß das Überströmventil 23, welches im Propfen 16 liegt, als letztes bläst und nun mit der gesamten Blaskraft den Propfen zerteilt, während die anderen stromabwärts gerichteten Überströmventile 24 und 25 bereits schon geschlossen sind.

Nach der Beseitigung des Propfens 16 kommt über den Restdruck in der Förderleitung 5 unterhalb der Zellenradschleuse 3, der dem Druck in der Leitung 10 entspricht, die Förderung in der Förderleitung 5 wieder in Gang.

Dadurch schließt auch das Überströmventil 23 und es stellt sich der idealisierte Druckverlauf 19 gemäß Figur 3 wieder ein.

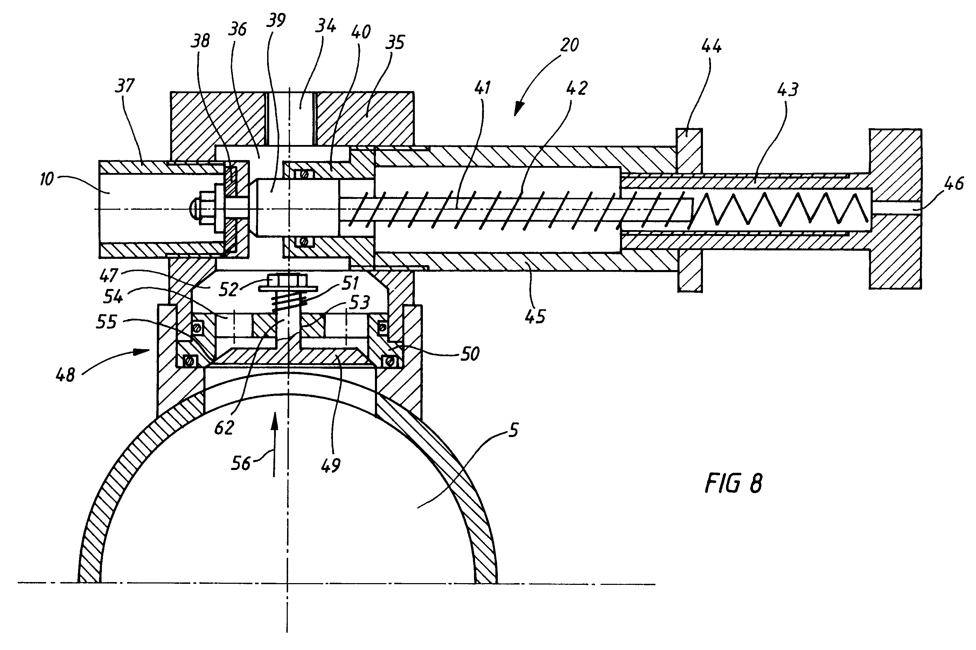

In Figur 8 ist beispielsweise ein Überströmventil 20 dargestellt. Es besteht aus einem Ventilgehäuse 35, welches eine obere Bohrung 34 zum Einschrauben eines Manometers aufweist.

Es ist eine erste Kammer 36 in dem Ventilgehäuse 35 eingearbeitet, in welche ein Anschlußstutzen 37 mündet, welcher an die Begleitleitung 10 angeschlossen ist.

An der Mündung des Stutzens 37 ist eine Ventilscheibe 38 federbelastet angedrückt, die mit einem Ventilstößel 39 verbunden ist. Der Ventilstößel 39 ist abgedichtet in einer Lagerbüchse 40 geführt und wird federbelastet unter der Kraft einer Feder 42 an die Öffnung im Stutzen 37 gepreßt.

Die Feder 42 umgreift hierbei einen Ventilschaft 41, der mit dem Ventilstößel 39 verbunden ist. Die Feder 42 stützt sich hierbei mit ihrem äußeren Ende an der Innenseite einer Einstellhülse 43 ab, die mit einer Kontermutter 44 fixiert werden kann.

Durch Ein- oder Ausschrauben der Einstellhülse 43 kann somit die Federkraft der Feder 42 stufenlos verändert werden.

Der Ventilschaft 41 erstreckt sich im übrigen durch ein Rohr 45, welches Teil des Gehäuses 35 ist und welches in eine entsprechende Gewindebohrung eingeschraubt ist. An der Rückseite der Einstellhülse 43 ist eine Entlüftungsbohrung 46 angeordnet.

Im Ventilgehäuse 35 ist eine weitere Kammer 47 angeordnet, in welcher ein Kegelventil 48 angeordnet ist. Dieses Kegelventil 48 besteht aus einem Ventilkegel 49, der in Schließrichtung (Pfeilrichtung 56) von der Förderleitung 5 beaufschlagt wird und hierbei einen Ventilsitz 55 mit einer gehäusefesten Ventilplatte 50 bildet. Diese Ventilplatte 50 weist eine Scheibe auf, in welcher Bohrungen 54 eingearbeitet sind. Durch eine Bohrung 53 in dieser Scheibe greift der Ventilstößel 62 des Ventilkegels 49 hindurch und ist an seinem Ende mit einer Mutter 52 verbunden. Im Zwischenraum zwischen der Mutter 52 und der Ventilplatte 50 ist eine Feder 51 angeordnet. Auf diese Weise wird der Ventilkegel 49 federbelastet durch die Feder 51 in Schließstellung an seinem Ventilsitz 55 gehalten.

Das Überströmventil 20 befindet sich im Gleichgewicht, wenn die in Öffnungsrichtung wirkende Kraft auf die Ventilscheibe 38 sich im Gleichgewicht befindet mit der Summe der Kräfte, die bestehend aus der Federkraft der Feder 42, die in Schließstellung auf die Ventilplatte 38 wirkt, zuzüglich der Kraft auf eine Ringfläche auf den Ventilstößel 39, welche entsteht durch den statischen Druck in der Kammer 36. Dieser Druck entsteht durch die Schließstellung des Ventilkegels 49 unter der Kraft der Feder 51 in der Kammer 47. Diese Schließstellung hängt wiederum von dem Druck in der Förderleitung 5 ab.

Zur weiteren Erläuterung wird ausgeführt, daß der statische Druck in der Kammer 36 dadurch entsteht, daß der Druck in der Förderleitung 5 zunächst den Ventilkegel 49 schließt. Über einen sich beginnenden Druckausgleich füllt somit die Begleitleitung 10 über den Stutzen 37 bei sich öffnender Ventilscheibe 38 die Kammer 36 auf. Bis sich das Ventil im Gleichgewicht befindet und die Feder 42 das Ventil wieder in Schließstellung bringt. Dies ist die Ausgangslage des Überströmventils 20. Es öffnet sich demzufolge dann, wenn der Druck in der Förderleitung 5 abfällt, und zwar unterhalb des Druckes, den die Feder 51 in Schließrichtung auf den Ventilkegel 49 ausübt.

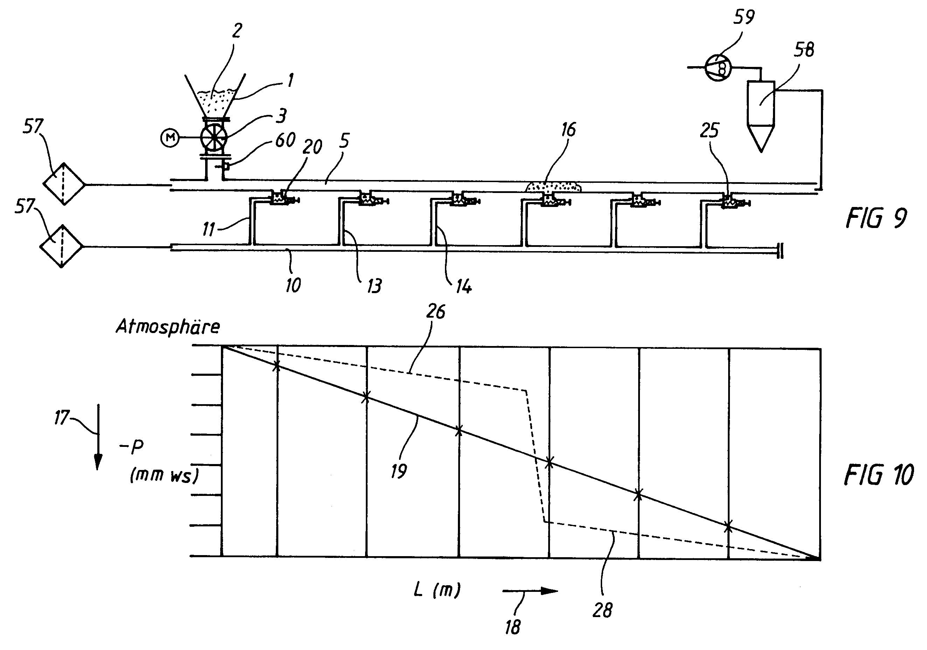

In den Figuren 9 bis 12 wird nun die Funktion einer anderen Vorrichtung erläutert, die nach dem gleichen Prinzip der Erfindung arbeitet, bei der aber nicht im Überdruckbereich gearbeitet wird, sondern im Saugförderbereich.

Es findet also keine Druckförderung sondern eine Saugförderung statt. Mathematisch gesehen finden genau die gleichen Verhältnisse wie oben stehend beschrieben statt, nur daß eben statt eines positiven (Überdrucks) ein negativer (Unterdruck) wirkt und die Atmosphäre selbst als Druckförderung arbeitet.

Gemäß Figur 9 ist demzufolge an der Förderleitung 5 am Ende eine Vakuumpumpe 59 mit einem nachgeschalteten Abscheider 58 angeschlossen, während stromaufwärts am Eingang der Förderleitung 5 ein Luftabsaugfilter 57 angeordnet ist, wobei in der Begleitleitung 10 ein gleicher Luftansaugfilter 57 angeordnet ist.

Es findet also eine Saugförderung aufgrund des Ansaugdruckes der Vakuumpumpe 59 statt. Es gelten somit die gleichen Verhältnisse in den Diagrammen Figuren 10 bis 12 wie vorhin anhand der Figuren 4 bis 7 beschrieben wurde.

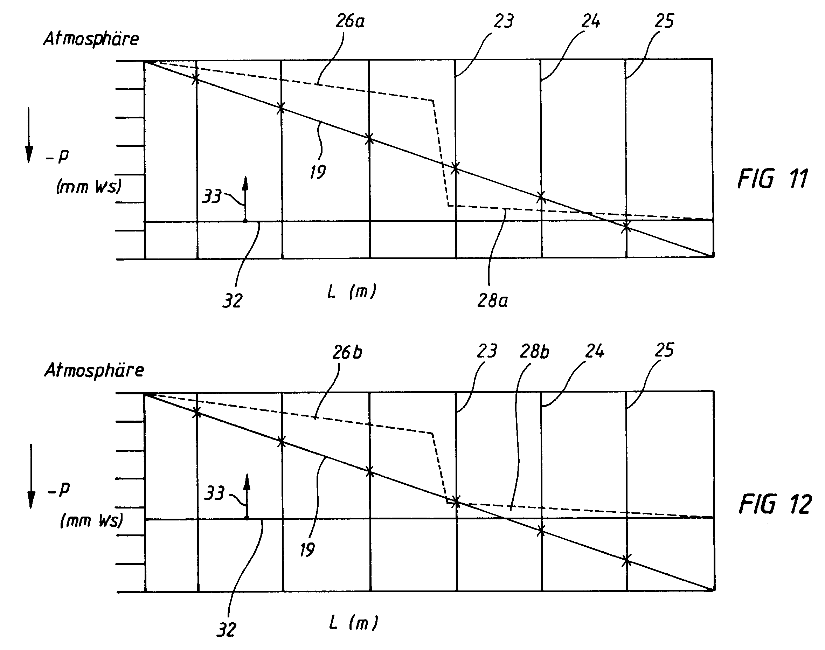

Als Unterschied ist zu erwähnen, daß der vorhandene Unterdruck fällt, d.h. die Null-Linie 32 bewegt sich in Pfeilrichtung 33 in Richtung höherer Drücke also in Richtung des Atmosphärendruckes und hieraus folgt wiederum, daß stromabwärts des Propfens 16 die Überströmventile 25,24,23 nacheinander folgend schließen, wobei in Figur 11 das Überströmventil 25 geschlossen ist, während die Überströmventile 24,23 noch geöffnet sind, während in der Figur 12 dann die Überströmventile 25 und 24 geschlossen sind und das Überströmventil 23 als einziges Ventil den Stopfen beseitigt.

Aus der oben stehenden Erläuterung ergibt sich, daß der Begriff Druckförderung nicht einschränkend zu verstehen ist, sondern es wird von der Erfindung sowohl eine Saugförderung als auch eine Druckförderung umschrieben, wobei eben statt positiver Drücke mit negativen Drücken gearbeitet wird.

Ergänzend sei noch darauf hingewiesen, daß am Auslauf der Zellenradschleuse 3 ein Füllstandsschalter 60 angeordnet ist, der die Zellenradschleuse 3 abschaltet, wenn aufgrund der sich auffüllenden Leitung kein weiteres Material mehr in die Leitung hineingefördert werden kann.

Nach Beseitigung des Stopfens wird die Förderleitung 5 wieder frei und damit fällt das Material am Füllstandsschalter 60 wieder weg und dieser schaltet dann die Zellenradschleuse 3 wieder ein.

Im übrigen wird noch darauf hingewiesen, daß die Versorgungsluft für die Förderleitung 5 und die Begleitleitung 10 aus einer Netzleitung 61 entnommen wird.

**Patentansprüche**

1. Vorrichtung zum pneumatischen Fördern von Schüttgut mit einer Förderleitung (5) für das Schüttgut mit einem Einlaß (1) und mit einem Auslaß für das Schüttgut sowie mit einem Einlaß (9) für Druckluft bzw. Saugluft, ferner mit einer Begleitleitung (10) mit einem Einlaß für die Druckluft bzw. atmosphärische Luft, wo etwa derselbe Druck herrscht wie am Einlaß der Förderleitung und mit Zweigleitungen (12-15) mit federbelasteten Überströmventilen (20-25) mit einstellbaren Federkräften, die voneinander beabstandet und an vorbestimmten Stellen in Strömungsverbindung mit der Förderleitung (5) stehen und die öffnen und dabei die Förderleitung freiblasen, wenn der Druck in der betreffenden Zweigleitung größer ist als die Schließkraft der Feder des betreffenden Überdruckventils, **dadurch gekennzeichnet**, daß die Begleitleitung an ihrem Ende verschlossen ist und daß die Schließkraft des jeweiligen Überstromventiles so voreingestellt ist, daß die Federkraft etwa der Differenz zwischen Förderdruck am Anfang der Förderleitung bzw. statischen Druck in der Begleitleitung und dem vorkalkulierten, durch mechanische Einstellung "aufgeprägten" und ggf. nachgeregelten Druck in der Förderleitung am Ort des betreffenden Überströmventils (20-25) entspricht, wenn der in die Förderleitung eingebrachte Massenstrom ungestört am jeweiligen Überströmventil vorbeifließt.

2. Vorrichtung nach Anspruch 1, **dadurch gekennzeichnet**, daß am Einlaß (1) für das Schüttgut eine Zellradschleuse (3) vorgesehen ist, deren Antriebsmotor (M) eine einstellbare Drehzahl hat.

3. Vorrichtung nach Anspruch 1 oder 2, **dadurch gekennzeichnet**, daß am Einlaß (9) für die Druckluft zur Förderleitung (5) ein einstellbarer Druckminderer (6) vorgesehen ist.

4. Vorrichtung nach einem der Ansprüche 1 bis 3, **dadurch gekennzeichnet**, daß die Förderleitung (5) und die Begleitleitung (10) an dieselbe Druckleitung (61) angeschlossen sind.

**Claims**

1. A device for the pneumatic conveying of bulk material with a conveying line (5) for the bulk material with an inlet (1) and with an outlet for the bulk material and also with an inlet (9) for compressed air or vacuum intake air, in addition with an accompanying line (10) with an inlet for the compressed air or atmospheric air, where approximately the same pressure prevails as at the inlet of the conveying line and with branch lines (12-15) with spring-loaded overflow valves (20-25) with adjustable resilient forces, which are spaced apart from each other and are in flow connection with the conveying line (5) at predetermined sites and which open and thereby blow free the conveying line when the pressure in the respective branch line is greater than the closing force of the spring of the respective excess pressure valve, characterised in that the accompanying line is closed at its end and that the closure force of the respective overflow valve is pre-set so that the resilient force corresponds approximately to the difference between the conveying pressure at the start of the conveying line or static pressure in the accompanying line and the precalculated pressure, "superposed" by mechanical adjustment and possibly readjusted, in the conveying line at the site of the respective overflow valve (20-25), when the mass flow which is introduced into the conveying line flows undisturbed past the respective overflow valve.

2. A device according to Claim 1, characterised in that at the inlet (1) for the bulk material a bucket wheel sluice (3) is provided, the drive motor (M) of which has an adjustable rotational speed.

3. A device according to Claim 1 or 2, characterised in that at the inlet (9) for the compressed air to the conveying line (5) an adjustable pressure reducer (6) is provided.

4. A device according to one of Claims 1 to 3, characterised in that the conveying line (5) and the accompanying line (10) are connected to the same pressure line (61).

**Revendications**

1. Dispositif pour le transport pneumatique d'un produit en vrac, comprenant une conduite de transport (5) pour le produit en vrac pourvue d'une entrée (1) et d'une sortie pour le produit, et d'une entrée (9) pour l'air comprimé ou l'air aspiré, une conduite secondaire (10) pourvue d'une entrée pour l'air comprimé ou l'air atmosphérique, où la pression est à peu près la même qu'au niveau de l'entrée de la conduite de transport, et des conduites dérivées (12-15) qui sont pourvues de soupapes de trop-plein (20-25) commandées par ressort et dotées de forces de ressort réglables, qui sont espacées les unes des autres, qui sont reliées suivant une relation d'écoulement avec la conduite de transport (5) au niveau de points prédéfinis et qui s'ouvrent et dégagent ainsi la conduite de transport lorsque la pression qui règne dans la conduite dérivée concernée est supérieure à la force de fermeture du ressort de la soupape de surpression concernée, **caractérisé** en ce que la conduite secondaire est fermée à son extrémité et en ce que la force de fermeture de la soupape de trop-plein concernée est préréglée pour que la force de ressort corresponde approximativement à la différence entre la pression de transport qui règne au début de la conduite de transport ou la pression statique qui règne dans la conduite secondaire, et la pression pré-calculée et "marquée" grâce à un réglage mécanique et éventuellement réajustée qui règne dans la conduite de transport à l'endroit de la soupape de trop-plein (20-25) concernée, lorsque le courant de masse introduit dans la conduite de transport passe sans incident devant la soupape de trop-plein concernée.

2. Dispositif selon la revendication 1, **caractérisé** en ce qu'il est prévu, au niveau de l'entrée (1) du produit en vrac, un sas à roue cellulaire (3) dont le moteur d'entraînement (M) a une vitesse réglable.

3. Dispositif selon la revendication 1 ou 2, **caractérisé** en ce qu'il est prévu, au niveau de l'entrée (9) prévue pour l'air comprimé vers la conduite de transport (5), un réducteur de pression (6) réglable.

4. Dispositif selon l'une des revendications 1 à 3, **caractérisé** en ce que la conduite de transport (5) et la conduite secondaire (10) sont reliées à la même conduite de pression (61).

FIG 1

EP 0 603 601 B1

EP 0 603 601 B1

20  5  21  22  16  23  24  25

60

31

10  15  **FIG 2**

17

P

(mm WS)

P Feder 20  P"

P Feder 21  P"

P Feder 22

30

32

P Feder 23

P Feder 24

P Feder 25

26

19

27

29

29'

P'

P'

P'

L  (m)

28  **FIG 3**

18

FIG 4

FIG 5

FIG 6

FIG 7

FIG 8

FIG 9

FIG 10

FIG 11

FIG 12